# EUROPÄISCHE PATENTSCHRIFT

(11) **EP 0 447 640 B1**
(45) Veröffentlichungstag und Bekanntmachung des Hinweises auf die Patenterteilung: **12.01.1994**
(21) Anmeldenummer: 90124045.7
(22) Anmeldetag: 13.12.1990
(51) Int. Cl.: B60J 7/22

(54) **Auf die feste Dachhaut eines Fahrzeugs aufsetzbare Rahmenspoileranordnung**
Frame-spoiler arrangement for the fixation on the fixed part of a vehicle roof
Construction d'un cadre avec spoiler pour la fixation sur la partie rigide d'un toit de véhicule

(30) Priorität: 20.03.1990 DE 4008899
(43) Veröffentlichungstag der Anmeldung: 25.09.1991
(73) Patentinhaber: Webasto AG Fahrzeugtechnik, D-82131 Stockdorf (DE)
(72) Erfinder: Jardin, Hans, W-8084 Inning (DE)

(56) Entgegenhaltungen:
- DE-A- 3 816 977
- DE-A- 3 902 707

## Beschreibung

Die Erfindung bezieht sich auf eine auf die feste Dachhaut eines Fahrzeugs im Bereich einer Dachöffnung aufsetzbare Rahmen-Spoiler-Anordnung mit einem sich im montierten Zustand entlang dem Umfang der Dachöffnung erstreckenden und in seinem hinteren Teil eine einstückig angeformte Querstrebe aufweisenden Rahmen zum Abstützen eines Antriebs- und Verstellmechanismus für eine dem wahlweisen Verschließen oder mindestens teilweisen Freilegen einer Dachöffnung dienende Abdeckung, sowie mit einem querverlaufenden Frontspoiler, der mit dem vorderen Teil des Rahmens einstückig verbunden ist.

Bei einer bekannten Rahmen-Spoiler-Anordnung dieser Art (DE-A-38 01 881) liegt die hintere Querstrebe im wesentlichen unterhalb der festen Dachhaut; sie sitzt auf einer Abkantung am hinteren Rand der Dachöffnung auf, und nur ein schmaler Abdeckflansch reicht nach hinten, um den Spalt zwischen dem Hauptteil der hinteren Querstrebe und der Abkantung der Dachhaut von oben abzudecken. Führungsschienen für den Verstellmechanismus der dort als Doppelspoilerdach ausgebildeten Abdeckung sind in den Rahmen eingesetzt und mit diesem in nicht näher dargestellter Weise verbunden.

Es ist ferner ein Faltdach für Fahrzeuge bekannt (DE-A-38 16 977 und DE-A-39 02 707), bei dem ein um eine Dachöffnung umlaufender Blechrahmen von oben auf die Dachhaut aufgesetzt wird und dabei mit flachen Flanschabschnitten allseitig auf dem Rand der Dachöffnung abgestützt ist. Führungsschienen für den Verstellmechanismus der Faltdachabdeckung sind zu beiden Seiten der Dachöffnung verlaufend an dem Blechrahmen befestigt. Auf der Dachhaut sind ferner voneinander und vom Rahmen gesondert ein Frontspoiler und ein Heckspoiler angebracht, die sich im Bereich des vorderen bzw. des hinteren Randes der Dachöffnung jeweils quer über die Dachhaut erstrecken.

Der im Anspruch 1 angegebenen Erfindung liegt die Aufgabe zugrunde, eine Rahmen-Spoiler-Anordnung der eingangs genannten Art zu schaffen, die für verbesserte aerodynamische Eigenschaften sorgt, die besonders einfach am Fahrzeug zu montieren ist und die eine genaue gegenseitige Zuordnung der Dachfunktionsteile gewährleistet.

Diese Aufgabe wird erfindungsgemäß dadurch gelöst, daß bei einer Rahmen-Spoiler-Anordnung der eingangs genannten Art an dem Rahmen zusätzlich zu beiden Seiten der Dachöffnung verlaufende Führungen für den Verstellmechanismus angeformt sind und daß Teil der hinteren Querstrebe ein über die feste Dachhaut hochstehender Heckspoiler ist.

Bei der Rahmen-Spoiler-Anordnung nach der Erfindung sind der Rahmen, die Führungen (z.B. Führungsbahnen, Führungskanäle, Führungsschienen oder dergleichen), der Frontspoiler und der Heckspoiler zu einer als Ganzes auf die Dachhaut aufsetzbaren einstückigen Einheit zusammengefaßt. Diese Einheit bestimmt alle Funktionsmaße für den Einbau des Antriebs- und Verstellmechanismus, wodurch die beim Zusammenbau getrennt gefertigter Einzelteile unvermeidbaren Montagetoleranzen vermieden werden. Der Montageaufwand ist besonders gering. Durch die Integration sowohl des Front- als auch des Heckspoilers in den Rahmen werden störende Übergänge zwischen den Spoilern, dem Rahmen und dem Fahrzeug vermieden; das Fahrzeugdach erhält ein harmonisches Aussehen. Die Luftleiteigenschaften lassen sich exakt vorbestimmen und mit hoher Genauigkeit einhalten. Front- und Heckspoiler sorgen gemeinsam für eine Querversteifung des Rahmens, was zu einer sicheren und exakten Führung des Antriebs- und Verstellmechanismus der Abdeckung wesentlich beiträgt. Bei letzterer kann es sich in an sich bekannter Weise u.a. um ein Faltdachverdeck (DE-A-39 02 707), die Lamellen eines Lamellendaches (DE-A-33 16 739), die Deckel eines Doppelspoiler-Schiebedaches (DE-A-38 01 881) oder dergleichen handeln. Solche Abdeckungen und der zugehörige, gleichfalls an sich bekannte Antriebs- und Verstellmechanismus können beim Zulieferer auf der Rahmen-Spoiler-Anordnung fertig montiert und geprüft werden; die fertige Dacheinheit braucht dann am Fertigungsband des Fahrzeugherstellers nur noch auf das Fahrzeug aufgesetzt und mit diesem mit wenigen Handgriffen oder mittels eines Montageroboters verbunden zu werden.

Bevorzugte weitere Ausgestaltungen der Erfindung ergeben sich aus den Unteransprüchen.

Die Rahmen-Spoiler-Anordnung ist vorzugsweise aus einem Faserschichtverbundwerkstoff gefertigt. Dadurch lassen sich hohe Steifigkeit und Festigkeit mit relativ geringem Gesamtgewicht erreichen. Als Faserschichtverbundwerkstoff besonders geeignet sind glasfaserverstärkte Polyesterharze (SMC) und Glasmatten-Thermoplaste (GMT).

Zur weiteren Vereinfachung der Montage der Rahmen-Spoiler-Anordnung auf dem Fahrzeug können zweckmäßig in die Rahmen-Spoiler-Anordnung nach unten abstehende Stehbolzen eingebettet sein. In die Rahmen-Spoiler-Anordnung sind ferner vorteilhaft Schraubeinsätze eingebettet, um Anbauteile, beispielsweise einen Antriebsmotor zum Verstellen der Abdeckung, zu befestigen. An der Rahmen-Spoiler-Anordnung kann zweckmäßig mindestens eine Dichtungsaufnahme für eine mit der Abdeckung zusammenwirkende Dichtung und/oder für eine Abdichtung der Rahmen-Spoiler-Anordnung auf der Dachhaut angeformt sein. In ähnlicher Weise lassen sich auch Wasserläufe einfach an der Rahmen-Spoiler-Anordnung anformen.

Bei den Karosserien moderner Personenkraftwagen bereitet häufig die Befestigung eines Dachgepäckträgers Schwierigkeiten. Vorliegend können an der Rahmen-Spoiler-Anordnung Mittel zur Befestigung eines Dachgepäckträgers ausgebildet sein. Entsprechend einer abgewandelten Ausführungsform ist es auch möglich, die Rahmen-Spoiler-Anordnung selbst zugleich als Dachgepäckträger auszugestalten. In die erfindungsgemäße Rahmen-Spoiler-Anordnung lassen sich weitere Zusatzteile integrieren, beispielsweise eine Antenne, eine Dachzierleiste oder dergleichen.

Ausführungsbeispiele der Erfindung werden im folgenden anhand der Zeichnungen näher erläutert. Es zeigt:
- Fig. 1: eine schematische perspektivische Ansicht einer einstückigen Rahmen-Spoiler-Anordnung nach der Erfindung,
- Fig. 2: den Schnitt entlang der Linie II-II im Bereich der einen Längsseite der Rahmen-Spoiler-Anordnung der Fig. 1,
- Fig. 3: den Schnitt entlang der Linie III-III im vorderen Teil der Rahmen-Spoiler-Anordnung der Fig. 1, und
- Fig. 4: den Schnitt entlang der Linie IV-IV im hinteren Teil der Rahmen-Spoiler-Anordnung der Fig. 1.

Die veranschaulichte, insgesamt mit 10 bezeichnete Rahmen-Spoiler-Anordnung weist einen Rahmen 11 auf, der sich im montierten Zustand entlang dem Umfang einer in der festen Dachhaut 12 eines Fahrzeugs ausgebildeten Dachöffnung 13 erstreckt. Zu dem Rahmen 11 gehören Seitenstreben 14 und 15, eine vordere Querstrebe 16 und eine hintere Querstrebe 17. Die Streben 14, 15, 16 und 17 stehen untereinander in einstückiger Verbindung. Der Rahmen 11 dient dem Abstützen eines nicht veranschaulichten Antriebs- und Verstellmechanismus für eine gleichfalls nicht dargestellte Abdeckung zum wahlweisen Verschließen oder mindestens teilweisen Freilegen der Dachöffnung 13. Der Antriebs- und Verstellmechanismus sowie die Abdeckung können in beliebiger, an sich bekannter Weiser ausgestaltet sein. Beispiele dafür finden sich in den vorstehend genannten Literaturstellen.

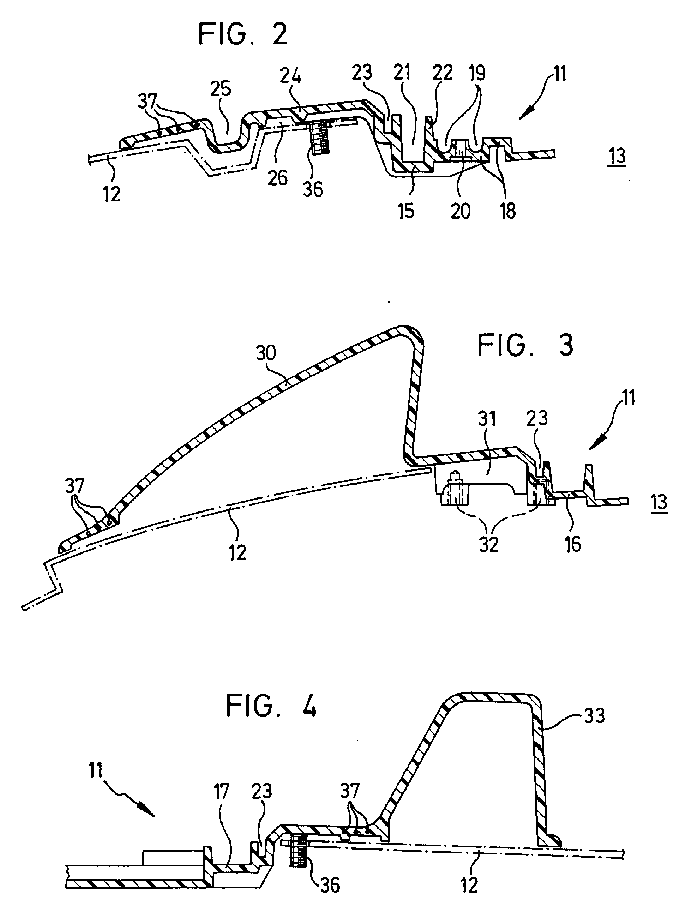

Entsprechend Fig. 2 ist Teil der Seitenstreben 14 und 15 jeweils eine an der Rahmen-Spoiler-Anordnung 10 angeformte, in Fahrzeuglängsrichtung verlaufende Führung 18 mit zwei parallelen, nach oben offenen Führungskanälen 19, in die Antriebskabel eingelegt werden können. Die Führungskanäle 19 lassen sich oben durch eine Abdeckung (nicht veranschaulicht) abschließen. Eine solche Abdeckung kann durch Schrauben gehalten werden, die in entsprechende Durchführungen 20 der Führung 18 eingesteckt werden. An der von der Dachöffnung 13 abgewendeten Seite der Führung 18 sind die Seitenstreben 14,15 jeweils mit einem Wasserlauf 21 versehen, der gegenüber den Führungskanälen 19 mittels eines hochstehenden Steges 22 abgeschottet ist. Rings um den Rahmen 11 erstreckt sich eine Dichtungsaufnahme 23, in die eine Dichtung für die Abdeckung eingelegt werden kann. Die Seitenstreben 14 und 15 legen sich bei der veranschaulichten Ausführungsform mit einem relativ breiten Seitenflansch 24 auf die Dachhaut 12 auf. In dem Seitenflansch 24 ist eine äußere Regenrinne 25 ausgebildet. An der Unterseite des Seiterflanschs 24 befindet sich eine Dichtungsaufnahme 26, in die eine sich gegen die Oberseite der Dachhaut 12 anlegende Dichtung eingebracht werden kann.

Ebenso wie die Dichtungsaufnahme 23 können sich auch die Dichtungsaufnahme 26 und der Wasserlauf 21 im Bereich der vorderen Querstrebe 16 und/oder der hinteren Querstrebe 17 fortsetzen.

Wie insbesondere in Fig. 3 dargestellt ist, geht die vordere Querstrebe 16 einstückig in einen über der festen Dachhaut 12 liegenden Frontspoiler 30 über, der von vorne nach hinten ansteigt. An der Unterseite der vordere Querstrebe 16 sitzt ein Lagerbock 31 mit eingebetteten Schraubeinsätzen 32 zur Befestigung eines dem Verstellen der Abdeckung dienenden Antriebsmotors.

Gemäß Fig. 4 ist Teil der hinteren Querstrebe 17 ein über die Dachhaut 12 hochstehender Heckspoiler 33, der hinter dem hinteren Rand der Dachöffnung 13 sitzt und der sich parallel zu dieser quer über die Dachhaut erstreckt.

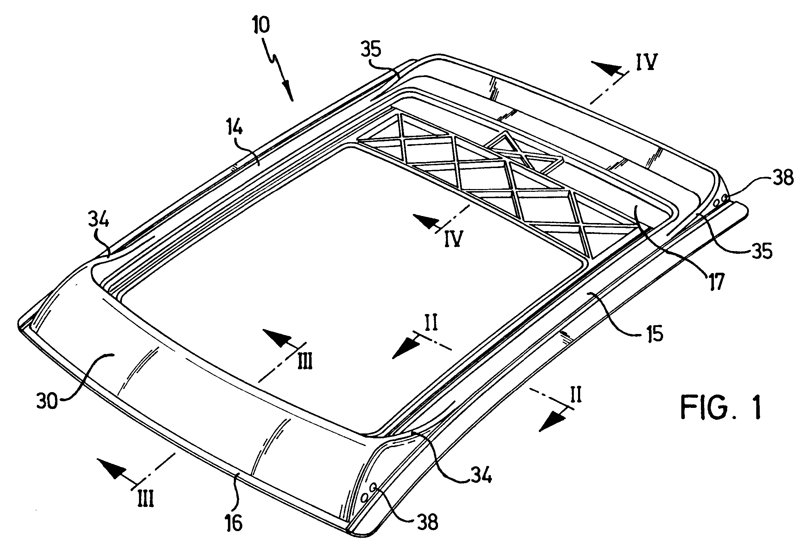

Wie die Fig. 1 erkennen läßt, gehen der Frontspoiler 30 und der Heckspoiler 33 im Bereich von seitlichen Übergangszonen 34 bzw. 35 allmählich und harmonisch in die äußeren Randteile der Seitenstreben 14 und 15 über. In die Rahmen-Spoiler-Anordnung 10 sind entlang deren Umfang verteilt nach unten abstehende Stehbolzen 36 eingebettet, die zur Befestigung der Rahmen-Spoiler-Anordnung auf dem Fahrzeugdach durch entsprechende Ausnehmungen der Dachhaut 12 von oben hindurchgesteckt werden, wenn die Anordnung 10 auf die Dachhaut 12 aufgesetzt wird.

In die Rahmen-Spoiler-Anordnung können weitere Zusatzbauteile integriert sein. Beispielsweise ist in den Fign. 2, 3 und 4 eine eingebettete Antenne 37 angedeutet. Desweiteren kann die Rahmen-Spoiler-Anordnung 10 mit Mitteln zur Befestigung eines Dachgepäckträgers ausgebildet sein. Entsprechende Befestigungsöffnungen sind in Fig. 1 bei 38 dargestellt. Diese Öffnungen können, falls erwünscht, mit Klappen oder Kappen verschließbar ausgebildet sein.

Die veranschaulichte Rahmen-Spoiler-Anordnung 10 ist aus einem Faserschichtverbundwerkstoff, vorzugsweise aus glasfaserverstärktem Polyesterharz (SMC) oder aus Glasmatten-Thermoplast (GMT) gefertigt.

## Patentansprüche

1. Auf die feste Dachhaut (12) eines Fahrzeugs im Bereich einer Dachöffnung (13) aufsetzbare Rahmen-Spoiler-Anordnung mit einem sich im montierten Zustand entlang dem Umfang der Dachöffnung (13) erstreckenden und in seinem hinteren Teil eine einstückig angeformte Querstrebe (17) aufweisenden Rahmen (11) zum Abstützen eines Antriebs- und Verstellmechanismus für eine dem wahlweisen Verschließen oder mindestens teilweisen Freilegen einer Dachöffnung (13) dienende Abdeckung, sowie mit einem querverlaufenden Frontspoiler (30), der mit dem vorderen Teil des Rahmens (11) einstückig verbunden ist, **dadurch gekennzeichnet**, daß an dem Rahmen (11) zusätzlich zu beiden Seiten der Dachöffnung (13) verlaufende Führungen (18) für den Verstellmechanismus angeformt sind und daß Teil der hinteren Querstrebe (17) ein über die feste Dachhaut (12) hochstehender Heckspoiler (33) ist.

2. Rahmen-Spoiler-Anordnung nach Anspruch 1, dadurch gekennzeichnet, daß sie aus einem Faserschichtverbundwerkstoff gefertigt ist.

3. Rahmen-Spoiler-Anordnung nach Anspruch 2, dadurch gekennzeichnet, daß sie aus glasfaserverstärktem Polyesterharz (SMC) gefertigt ist.

4. Rahmen-Spoiler-Anordnung nach Anspruch 2, dadurch gekennzeichnet, daß sie aus einem Glasmatten-Thermoplast (GMT) gefertigt ist.

5. Rahmen-Spoiler-Anordnung nach einem der vorhergehenden Ansprüche, gekennzeichnet durch in die Anordnung (10) eingebettete, nach unten abstehende Stehbolzen (36) zur Befestigung der Spoiler-Rahmen-Anordnung auf der Dachhaut (12).

6. Rahmen-Spoiler-Anordnung nach einem der vorhergehenden Ansprüche, gekennzeichnet durch in die Anordnung (10) eingebettete Schraubeinsätze (32) zur Befestigung von Anbauteilen, insbesondere eines Antriebsmotors zum Verstellen der Abdeckung.

7. Rahmen-Spoiler-Anordnung nach einem der vorhergehenden Ansprüche, dadurch gekennzeichnet, daß an der Anordnung (10) mindestens eine Dichtungsaufnahme (23) angeformt ist.

8. Rahmen-Spoiler-Anordnung nach einem der vorhergehenden Ansprüche, dadurch gekennzeichnet, daß an der Anordnung (10) mindestens ein Wasserlauf (21, 25) angeformt ist.

9. Rahmen-Spoiler-Anordnung nach einem der vorhergehenden Ansprüche, dadurch gekennzeichnet, daß an der Anordnung (10) Mittel (38) zur Befestigung eines Dachgepäckträgers ausgebildet sind.

10. Rahmen-Spoiler-Anordnung nach einem der Ansprüche 1 bis 8, dadurch gekennzeichnet, daß die Anordnung selbst zugleich als Dachgepäckträger ausgebildet ist.

11. Rahmen-Spoiler-Anordnung nach einem der vorhergehenden Ansprüche, dadurch gekennzeichnet, daß in die Anordnung (10) eine Antenne (37) eingebettet ist.

## Claims

1. A frame spoiler arrangement for mounting on the fixed roof skin (12) of a vehicle, in the region of a roof opening (13), with a frame (11) which, in the fitted condition, extends along the periphery of the roof opening (13) and has in its rear part an integrally formed cross-strut (17) and is intended to support a driving and adjusting mechanism for a covering serving for optional closure or at least partial exposure of a roof opening (13) and with a transversely extending front spoiler (30) which is integral with the front part of the frame (11), characterised in that guides (18) for the adjusting mechanism are integrally formed on the frame (11) and extend on both sides of the roof opening (13) and in that part of the rear transverse strut (17) is a rear spoiler (33) which stands proud of the fixed roof skin (12).

2. A frame spoiler arrangement according to Claim 1, characterised in that it is made from a laminated fibrous material.

3. A frame spoiler arrangement according to Claim 2, characterised in that it is made from a glass fibre reinforced polyester resin (SMC).

4. A frame spoiler arrangement according to Claim 2, characterised in that it is made from a glass mat thermoplastics material (GMT).

5. A frame spoiler arrangement according to one of the preceding Claims, characterised by downwardly projecting stud bolts (36) embedded in the arrangement (10) and by which the spoiler frame arrangement can be fixed on the roof skin (12).

6. A frame spoiler arrangement according to one of the preceding Claims, characterised by screwed inserts (32), embedded in the arrangement (10), for the mounting of attachment parts, particularly a drive motor for adjustment of the covering.

7. A frame spoiler arrangement according to one of the preceding Claims, characterised in that at least one seal housing (23) is integrally formed on the arrangement (10).

8. A frame spoiler arrangement according to one of the preceding Claims, characterised in that at least one gutter (21, 25) is integrally formed on the arrangement (10).

9. A frame spoiler arrangement according to one of the preceding Claims, characterised in that means (38) of fixing a roof-mounted luggage rack are constructed on the arrangement (10).

10. A frame spoiler arrangement according to one of Claims 1 to 8, characterised in that the arrangement itself is at the same time constructed as a roof-mounted luggage rack.

11. A frame spoiler arrangement according to one of the preceding Claims, characterised in that an aerial (37) is embedded in the arrangement (10).

## Revendications

1. Construction d'un cadre avec spoïler pour la fixation sur la partie rigide (12) du toit d'un véhicule dans la zone d'une ouverture (13) du toit avec un cadre (11) s'étendant en position montée le long du pourtour de l'ouverture (13) du toit et présentant à sa partie postérieure un montant transversal (17) formé d'une seul pièce destiné au soutien d'un mécanisme d'entraînement et de réglage pour un recouvrement servant au choix à la fermeture ou la libération au moins partielle d'une ouverture de toit (13), ainsi qu'avec un spoïler frontal (30) s'étendant transversalement, qui est relié d'une seule pièce à la partie antérieure du cadre (11), caractérisée en ce que sont formés des guidages (18) s'étendant sur le cadre (11) en plus des deux côtés de l'ouverture du toit (13) pour le mécanisme de réglage et en ce que la partie du montant transversal postérieur (17) est un spoïler arrière (33) se dressant au-dessus de la partie rigide du toit (12).

2. Construction d'un cadre avec spoïler selon la revendication 1, caractérisée en ce qu'elle est réalisée en une matière composite à couche de fibres.

3. Construction d'un cadre avec spoïler selon la revendication 2, caractérisée en ce qu'elle est réalisée en résine polyester renforcée par des fibres de verre (SMC).

4. Construction d'un cadre avec spoïler selon la revendication 2, caractérisée en ce qu'elle est réalisée en une matière thermoplastique avec mat de fibres de verre (GMT).

5. Construction d'un cadre ave spoïler selon l'une des revendications précédentes, caractérisée par des goujons verticaux (36) noyés dans la construction (10) et faisant saillie vers le bas servant à la fixation de la construction du cadre avec spoïler sur la partie rigide du toit (12).

6. Construction d'un cadre avec spoïler selon l'une des revendications précédentes, caractérisée par des inserts de vissage (32) noyés dans la construction (10) servant à la fixation de pièces détachées, en particulier d'un moteur d'entraînement pour le réglage du recouvrement.

7. Construction d'un cadre avec spoïler selon l'une des revendications précédentes, caractérisée en ce que sur la construction (10), est formé au moins une partie (23) pour recevoir un joint d'étanchéité.

8. Construction d'un cadre avec spoïler selon l'une des revendications précédentes, caractérisée en ce que sur la construction (10), est formé au moins une gouttière (21, 25).

9. Construction d'un cadre avec spoïler selon l'une des revendications précédentes, caractérisée en ce que sur la constriction (10), sont formés des moyens (38) pour la fixation d'un porte-bagages de toit.

10. Construction d'un cadre avec spoïler selon l'une des revendications 1 à 8, caractérisée en ce que la construction elle-même est réalisée en même temps que le porte-bagages du toit.

11. Construction d'un cadre avec spoïler selon l'une des revendications précédentes, caractérisée en ce qu'une antenne (37) est incorporée dans la construction (10).
